# EUROPÄISCHE PATENTSCHRIFT

(11) **EP 0 941 291 B1**
(45) Veröffentlichungstag und Bekanntmachung des Hinweises auf die Patenterteilung: **07.02.2001**
(21) Anmeldenummer: 97951252.2
(22) Anmeldetag: 20.11.1997
(51) Int. Cl.: C09D 5/02, C09D 5/20, C09D 131/02

(54) **VERFAHREN ZUR HERSTELLUNG TEMPORÄRER SCHUTZÜBERZÜGE**
PROCESS FOR PREPARING TEMPORARY PROTECTIVE COATINGS
PROCEDE POUR PREPARER DES REVETEMENTS PROTECTEURS TEMPORAIRES

(30) Priorität: 28.11.1996 DE 19649263
(43) Veröffentlichungstag der Anmeldung: 15.09.1999
(73) Patentinhaber: E.I. DU PONT DE NEMOURS AND COMPANY, Wilmington Delaware 19898 (US); Clariant GmbH, 65929 Frankfurt am Main (DE)
(72) Erfinder: FRIGGE, Eva, D-45549 Sprockhövel (DE); BODE, Brigitte, D-58256 Ennepetal (DE); BREIDENBACH, Gerhard, D-42399 Wuppertal (DE); GUTTE, Richard, D-65929 Frankfurt am Main (DE)
(74) Vertreter: Gille Hrabal Struck Neidlein Prop Roos
(86) Internationale Anmeldenummer: EP9706486
(87) Internationale Veröffentlichungsnummer: WO9823692

(56) Entgegenhaltungen:
- PATENT ABSTRACTS OF JAPAN vol. 006, no. 219 (C-132), 2.November 1982 & JP 57 121067 A (NIPPON GOSEI KAGAKU KOGYO KK), 28.Juli 1982,
- PATENT ABSTRACTS OF JAPAN vol. 011, no. 268 (C-444), 29.August 1987 & JP 62 070461 A (SAKATA SHOKAI LTD), 31.März 1987,

## Beschreibung

Die Erfindung betrifft ein Verfahren zur Herstellung temporärer Schutzüberzüge auf der eingebrannten äußeren Lackschicht einer Kraftfahrzeuglackierung.
Die Schutzüberzüge werden zum Schutz der Lackoberfläche von Kraftfahrzeugen, insbesondere Neufahrzeugen, beispielsweise während Montage, Transport und Lagerung aufgebracht. Sie können nach Gebrauch als folienartiger Film leicht wieder entfernt werden.

Wäßrige Überzugsmittel zum Zweck des temporären Schutzes hochwertiger Güter sind bekannt. Beispielsweise werden neue Kraftfahrzeuge während Lagerung und Transport mit derartigen Schutzlacken überzogen. Die Schutzlacke sind leicht vom Objekt wieder entfernbar, beispielsweise durch Abwaschen mit entsprechenden Reinigungslösungen oder sie lassen sich als Folie abziehen, die im allgemeinen durch Verbrennung entsorgt wird.
Temporäre, in Folienform nach Gebrauch abziehbare, wäßrige Schutzlacke sind bekannt. Beispielsweise handelt es sich um wäßrige Überzugsmittel auf der Basis von Copolymerisaten, die Comonomere wie (Meth)acrylnitril oder (Meth)acrylamid enthalten. Nach Gebrauch werden die gebildeten Überzüge als Folie abgezogen und verbrannt, wobei es zur Freisetzung giftiger Gase kommt. Weitere Beispiele sind wäßrige Überzugsmittel auf der Basis von Copolymerisaten, welche Comonomere mit durch Aminneutralisation in anionische Gruppen überführte Gruppen enthalten. Die Amine verflüchtigen sich beim Trocknen der Überzugsschichten.

Aus WO 90 08 165 sind wäßrige Schutzlacke bekannt, die nach Erfüllung ihrer Schutzfunktion als folienartiger Film abgezogen werden können. Ihr Anwendungsgebiet ist der temporäre Schutz verschiedenster Gebäudeteile vor bautypischen Verschmutzungen während Bauarbeiten. Die wäßrigen Schutzlacke enthalten eine Polymerdispersion als Bindemittel, die Acrylatharze, Polyvinylalkohol, Ethen/Vinylacetat-Copolymere und Copolymere aus Vinyl- und Acrylmonomeren, jeweils entweder allein oder in beliebiger Mischung umfassen kann. Die JP-A-57 121 067 betrifft ein Überzugsmittel zum Schutz von wasserdichten Schichten gegen das Ausbluten von Teer. Das Überzugsmittel basiert auf Ethylen/Vinylacetat-Copolymeren und Acrylharzen.
Aufgabe der Erfindung ist die Bereitstellung eines Verfahrens zur Herstellung temporärer Schutzüberzüge aus wäßrigen, als Folie entfernbaren Überzugsmitteln zum Schutz und zur Konservierung von Kraftfahrzeugen. Die verwendeten Überzugsmittel sollen möglichst wenige flüchtige organische Substanzen enthalten, und sie sollen den Anforderungen in der Kraftfahrzeugindustrie genügen, nämlich die Lackoberfläche von Neufahrzeugen während Montage, Transport und Lagerung vor Verschmutzung, Bildung von Wasserflecken und Anätzungen, beispielsweise durch sauren Regen zu schützen.

Die Aufgabe wird gelöst durch Bereitstellung eines Verfahrens zur Herstellung temporärer Schutzüberzüge durch Auftrag eines wäßrigen Überzugsmittels auf ein Substrat, das dadurch gekennzeichnet ist, daß man ein wäßriges Überzugsmittel, welches als Bindemittel in Form wäßrige Polymerdispersionen
A) 50 bis 90 Gew.-% eines oder mehrerer thermoplastischer Copolymere mindestens eines C2-C4-Olefins und mindestens eines Vinylesters einer C2-C11-Monocarbonsäure, wobei Olefin(e) und Vinylester im Gewichtsverhältnis 10 : 90 bis 40 : 60 vorliegen und gemeinsam mindestens 80 Gew.-% des Copolymeren ausmachen,
B) 10 bis 50 Gew.-% eines oder mehrerer thermoplastischer (Meth)acrylcopolymere, die frei sind von Comonomeren mit Nitril- und Amidgruppen und die zu mindestens 50 Gew.-% aus (Meth)acrylsäureestern von C1-C18-Alkoholen bestehen, und
C) 0 bis 30 Gew.-% eines oder mehrerer von A) und B) verschiedener Copolymere,
wobei sich die Gew.-% jeweils auf den Harzfestkörper beziehen und auf 100 Gew.-% ergänzen, enthält verwendet und wobei als Substrat eine eingebrannte äußere Lackschicht einer Kraftfahrzeuglackierung dient.

Bei Komponente A) des wäßrigen Überzugsmittels handelt es sich um eine wäßrige Polymerdispersion auf Basis eines thermoplastischen Copolymeren mindestens eines C2-C4-Olefins und mindestens eines Vinylesters einer C2-C11-Monocarbonsäure, wobei Olefin(e) und Vinylester in einem 10 : 90 bis 40 : 60-Gewichtsverhältnis vorliegen und gemeinsam mindestens 80 Gew.-% des thermoplastischen Copolymeren ausmachen. Beispiele für C2-C4-Olefine sind Ethen, Propen, Buten-1, Buten-2, Isobuten, bevorzugt ist Ethen. Beispiele für bevorzugte Vinylester sind Vinylacetat, Vinylpropionat und Vinylversatat, besonders bevorzugt ist Vinylacetat. Bei den einsetzbaren Versataten handelt es sich um Vinylester der Versatic-Säuren. Versatic-Säuren sind Handelsprodukte der Firma Shell für stark verzweigte, gesättigte Monocarbonsäuren mit längeren Alkyl-Seitenketten und tertiären Carboxylgruppen. Dabei handelt es sich bei den Versatic-Säuren um C-5 bis C-11-Alkansäuren. Olefin(e) und Vinylester liegen im thermoplastischen Copolymeren der Komponente A) in einem 10 : 90 bis 40 : 60-Gewichtsverhältnis vor, bevorzugt beträgt das Gewichtsverhältnis von Olefin(en) zu Vinylester(n) zwischen 15 : 85 und 30 : 70. Das Copolymere kann 0 bis 20 Gew.-% von C2-C4-Olefinen und Vinylestern einer C2-C11-Monocarbonsäure verschiedene, olefinisch ungesättigte Monomere einpolymerisiert enthalten. Bevorzugt sind Nitril- und Amidgruppen aufweisende Comonomere ausgeschlossen. Bevorzugt sind auch wasserlösliche Comonomere und durch Neutralisation in ionische Gruppen überführbare Gruppen aufweisende Comonomere, beispielsweise (Meth)acrylsäure ausgeschlossen. Falls saure Comonomere im Copolymeren der Komponente A) enthalten sind, so ist dies in einer nur geringen Menge der Fall, entsprechend einer Säurezahl des Copolymeren der Komponente A) von beispielsweise unter 10, bevorzugt unter 5 mg KOH/g. Bevorzugt weisen die in einem Mengenanteil bis zu 20 Gew.-% gegebenenfalls enthaltenen Comonomeren neben der olefinisch ungesättigten Doppelbindung keine weitere funktionelle Gruppe, wie beispielsweise Epoxidgruppen, Hydroxylgruppen und Alkoxysilangruppen, auf. Insbesondere werden dabei solche Comonomere vermieden, die aufgrund ihrer Funktionalität(en) allein oder in Kombination mit anderen Comonomeren zu einer internen Vernetzung des Copolymeren der Komponente A) oder zu einer Vernetzung zwischen dem Copolymeren der Komponente A), dem (Meth)acrylcopolymeren der Komponente B) und/oder dem Copolymeren der Komponente C) führen können. (Meth)acryl bezeichnet dabei, wie auch im folgenden, Methacryl und Acryl. Beispiele für im Copolymeren der Komponente A) gegebenenfalls enthaltene Comonomere ohne weitere funktionelle Gruppen neben der olefinisch ungesättigten Doppelbindung sind Alkylester, wie Fumarsäuredialkylester, Maleinsäuredialkylester, beispielsweise mit C1-C6-Alkyl, wie Methyl, Ethyl, Propyl, Butyl, Isopropyl, Isobutyl, Tertiärbutyl oder Hexyl, Vinylaromaten wie Styrol, Vinyltoluol, insbesondere jedoch (Meth)acrylsäureester von C1-C18-Monoalkoholen, wie beispielsweise Methyl(meth)acrylat, Ethyl(meth)acrylat, Propyl(meth)acrylat, Butyl(meth)acrylat, Isopropyl(meth)acrylat, Isobutyl(meth)acrylat, Tertiärbutyl(meth)acrylat, Hexyl(meth)acrylat, Cyclohexyl(meth)acrylat, 2-Ethylhexyl(meth)acrylat, 3,5,5-Trimethylhexyl(meth)acrylat, Dodecyl(meth)acrylat, Hexadecyl(meth)acrylat, Octadecyl(meth)acrylat, Lauryl(meth)acrylat, Isobornyl(meth)acrylat. Bevorzugt sind die Copolymeren der wäßrigen Polymerdispersion A) ausschließlich aus C2-C4-Olefin(en) und Vinylester(n) einer C2-C11-Monocarbonsäure aufgebaut. Besonders bevorzugt handelt es sich um Ethen/Vinylacetat-Copolymere. Die nach DIN 53 765 bestimmte Glasübergangstemperatur des thermoplastischen Copolymeren der Komponente A) liegt bevorzugt zwischen 0 und 30°C, besonders bevorzugt zwischen 5 und 20°C. Die Herstellung der wäßrigen Polymerdispersion A) erfolgt bevorzugt durch Emulsionspolymerisation. Bei den als Komponente A) besonders bevorzugten Ethen/Vinylacetat-Emulsionscopolymeren handelt es sich beispielsweise um im Handel erhältliche Produkte (vgl. Karsten, Lackrohstofftabellen, Curt R. Vincentz Verlag, Hannover, 1992, 9. Auflage, Kapitel 9.2.2, Seite 301).

Bei Komponente B) des verwendeten wäßrigen Überzugsmittels handelt es sich um eine wäßrige Polymerdispersion auf Basis eines thermoplastischen (Meth)acrylcopolymeren, welches keine Comonomeren mit Nitril- und Amidgruppen enthält und das zu mindestens 50 Gew.-% aus (Meth)acrylsäureestern von Cl-C18-Alkoholen besteht. Beispiele für (Meth)acrylsäureester von C1-C18-Monoalkoholen sind Methyl(meth)acrylat, Ethyl(meth)acrylat, Propyl(meth)acrylat, Butyl(meth)acrylat, Isopropyl(meth)acrylat, Isobutyl(meth)acrylat, Tertiärbutyl(meth)acrylat, Hexyl(meth)acrylat, Cyclohexyl(meth)acrylat, 2-Ethylhexyl(meth)acrylat, 3,5,5-Trimethylhexyl(meth)acrylat, Dodecyl(meth)acrylat, Hexadecyl(meth)acrylat, Octadecyl(meth)acrylat, Lauryl(meth)acrylat, Isobornyl(meth)acrylat. Das thermoplastische (Meth)acrylcopolymere der Komponente B) kann 0 bis 50 Gew.-% von (Meth)acrylsäureestern von C1-C18-Alkoholen verschiedene, olefinisch ungesättigte Monomere einpolymerisiert enthalten, wobei gilt, daß Nitril- und Amidgruppen aufweisende Comonomere ausgeschlossen sind. Bevorzugt sind auch wasserlösliche Comonomere und durch Neutralisation in ionische Gruppen überführbare Gruppen aufweisende Comonomere, beispielsweise (Meth)acrylsäure ausgeschlossen. Falls saure Comonomere im (Meth)acrylcopolymeren der Komponente B) enthalten sind, so ist dies in einer nur geringen Menge der Fall, entsprechend einer Säurezahl des (Meth)acrylcopolymeren der Komponente B) von beispielsweise unter 10, bevorzugt unter 5 mg KOH/g. Bevorzugt weisen die in einem Mengenanteil bis zu 50 Gew.-% gegebenenfalls enthaltenen Comonomeren neben der olefinisch ungesättigten Doppelbindung keine weitere funktionelle Gruppe, wie beispielsweise Epoxidgruppen, Hydroxylgruppen und Alkoxysilangruppen, auf. Insbesondere werden dabei solche Comonomere vermieden, die aufgrund ihrer Funktionalität(en) allein oder in Kombination mit anderen Comonomeren zu einer internen Vernetzung des (Meth)acrylcopolymeren der Komponente B) oder zu einer Vernetzung zwischen dem (Meth)acrylcopolymeren der Komponente B) und dem (den) Copolymeren der Komponente(n) A) und/oder C) führen können. Beispiele für im (Meth)acrylcopolymeren der Komponente B) gegebenenfalls enthaltene Comonomere ohne weitere funktionelle Gruppen neben der olefinisch ungesättigten Doppelbindung sind Alkylester, wie Fumarsäuredialkylester, Maleinsäuredialkylester, beispielsweise mit C1-C6-Alkyl, wie Methyl, Ethyl, Propyl, Butyl, Isopropyl, Isobutyl, Tertiärbutyl, Hexyl, Vinylaromaten wie Styrol, Vinyltoluol oder Vinylester einer C2-C11-Monocarbonsäure wie Vinylacetat, Vinylpropionat und Versaticsäurevinylester. Bevorzugt sind die (Meth)acrylcopolymeren der wäßrigen Polymerdispersion B) ausschließlich aus (Meth)acrylsäureestern von Cl-C18-Alkoholen aufgebaut. Die nach DIN 53 765 bestimmte Glasübergangstemperatur des thermoplastischen (Meth)acrylcopolymeren der Komponente B) liegt zwischen 0 und 30°C, bevorzugt zwischen 5 und 20°C. Die Herstellung der wäßrigen (Meth)acrylcopolymerdispersion B) erfolgt bevorzugt durch Emulsionspolymerisation. Bei den (Meth)acrylcopolymerdispersionen B) handelt es sich beispielsweise um im Handel erhältliche Produkte (vgl. Karsten, Lackrohstofftabellen, Curt R. Vincentz Verlag, Hannover, 1992, 9. Auflage, Kapitel 13.6.1, Seite 363).

Bei Komponente C) des erfindungsgemäß verwendeten wäßrigen Überzugsmittels handelt es sich um von A) und B) verschiedene Polymerdispersionen, wobei die gleichen Einschränkungen bezüglich der Monomerenauswahl gelten wie bei den Copolymeren der Komponente A) und den (Meth)acrylcopolymeren der Komponente B), d.h. Monomere mit Nitril- und Amidgruppen sind bevorzugt ausgeschlossen. Bevorzugt sind auch wasserlösliche Monomere und durch Neutralisation in ionische Gruppen überführbare Gruppen aufweisende Monomere, beispielsweise (Meth)acrylsäure ausgeschlossen. Falls saure Monomere im Copolymeren der Komponente C) enthalten sind, so ist dies in einer nur geringen Menge der Fall, entsprechend einer Säurezahl des Copolymeren der Komponente C) von beispielsweise unter 10, bevorzugt unter 5 mg KOH/g. Bevorzugt sind weiterhin auch keine Monomere enthalten, die neben der olefinisch ungesättigten Doppelbindung eine weitere funktionelle Gruppe aufweisen, wie beispielsweise Epoxidgruppen, Hydroxylgruppen und Alkoxysilangruppen. Insbesondere werden solche Monomere vermieden, die aufgrund ihrer Funktionalität(en) allein oder in Kombination mit anderen Comonomeren zu einer internen Vernetzung des Copolymeren der Komponente C) oder zu einer Vernetzung zwischen dem Copolymeren der Komponente C), dem Copolymeren der Komponente A) und/oder dem (Meth)acrylcopolymeren der Komponente B) führen können.

In einer bevorzugten Ausführungsform sind die thermoplastischen Copolymere der Komponente A) und/oder die Copolymere der Komponente C) frei von Comonomeren mit Nitril- und Amidgruppen. Es werden dann wäßrige Überzugsmittel erhalten, die zusätzlich den Vorteil aufweisen, daß die nach Gebrauch erhaltenen Folien bei der Verbrennung nur sehr wenig bzw. keine giftigen Gase freisetzen.

Die Komponenten A), B) und C) werden im Harzfestkörper-Verhältnis 50 bis 90 Teile A) : 10 bis 50 Teile B) : 0 bis 30 Teile C) vermischt, wobei sich die Teile zu 100 Teilen addieren. Bevorzugt wird auf Komponente C) verzichtet und es werden nur die Komponenten A) und B) im Harzfestkörper-Verhältnis 50 bis 90 Teile A) : 10 bis 50 Teile B), bevorzugt 55 bis 85 Teile A) : 15 bis 45 Teile B) vermischt.

Eine gegebenenfalls gewünschte, im allgemeinen jedoch nicht notwendige pH-Anpassung der in der Regel schwach sauren Mischungen der Komponenten A), B) und gegebenenfalls C) kann mittels organischer oder anorganischer Basen erfolgen, wie beispielsweise Ammoniak, Alkalicarbonate, Alkalihydroxide, Amine, Aminoalkohole. Dabei sind die anorganischen Basen bevorzugt.

Das erfindungsgemäß verwendete Überzugsmittel kann neben den Bindemittelkomponenten A), B) und gegebenenfalls C) weitere lackübliche Additive in lacküblichen Mengen enthalten. Beispiele sind Lichtschutzmittel, Verlaufsmittel, Schutzkolloide, Emulgatoren, Weichmacher, Entschäumer, Biocide, Trennmittel, Farbstoffe oder auch Pigmente in deckenden oder nichtdeckenden Mengenanteilen, beispielsweise zu Markierungszwecken und insbesondere rheologiesteuernde und/oder verdickend wirkende Mittel. Beispiele für letztere, die in Mengenanteilen von 0,1 bis 5 Gew.-%, bevorzugt von 0,5 bis 3 Gew.-%, bezogen auf den Festharzgehalt in den erfindungsgemäßen Überzugsmitteln enthalten sein können, sind hochdisperse Kieselsäure, anorganische Schichtsilikate, wasserlösliche Celluloseether wie Hydroxyethylcellulose, Methylcellulose, Carboxymethylcellulose, sowie synthetische Polymere mit ionischen und/oder assoziativ wirkenden Gruppen wie Polyvinylalkohol, Poly(meth)acrylsäure, Polyvinylpryrrolidon oder auch hydrophob modifizierte ethoxylierte Polyurethane oder Polyacrylate.

Silikone werden im erfindungsgemäß verwendeten wäßrigen Überzugsmittel bevorzugt vermieden.

Das wäßrige Überzugsmittel weist einen gegebenenfalls durch Zusatz von deionisiertem Wasser eingestellten, relativ hohen Festkörpergehalt von zum Beispiel 30 bis 60, bevorzugt 40 bis 55 Gew.-% auf, ein eventueller Gehalt an beispielsweise als Koaleszenzhilfsmittel enthaltenem organischen wasserverdünnbarem Lösemittel beträgt beispielsweise unter 5 Gew.-%, bevorzugt unter 2 Gew.-%, bezogen auf Harzfestkörper. Besonders bevorzugt enthalten die erfindungsgemäßen wäßrigen Überzugsmittel kein organisches Lösemittel.

Die erfindungsgemäß verwendeten wäßrigen Überzugsmittel werden als temporäre Schutzüberzüge auf hochwertige Güter aufgetragen. Die Applikation der so hergestellten Überzugsmittel kann in üblicher Weise erfolgen, beispielsweise durch Walzauftrag oder durch Streichen, bevorzugt wird durch Spritzen oder Gießen aufgetragen. Die Trocknung von aus den Überzugsmitteln erstellten Überzügen kann in einem weiten Temperaturbereich beispielsweise zwischen 20 und 80°C erfolgen. Die Überzugsmittel sind für Überzüge geeignet, die auf einer Vielzahl von Substraten haften, wie beispielsweise Holz, Textilien, Kunststoff, Glas, Keramik und insbesondere Metall und lackierte Metalle. Bevorzugt wird ein geschlossener nicht vernetzter, klebfreier Schutzüberzug erhalten. Bevorzugt wird das wäßrige Überzugsmittel in einer Trockenschichtdicke von 30 bis 100 µm, bevorzugt zwischen 40 und 80 µm aufgespritzt.

Eine bevorzugte Ausführungsform ist die Applikation des Überzugsmittels, bei der es durch Spritzen oder Gießen in einer Trockenschichtdicke von 30 bis 100 µm, bevorzugt zwischen 40 und 80 µm auf die eingebrannte äußere Lackschicht einer Kraftfahrzeugmehrschichtlackierung aufgespritzt und bei Temperaturen zwischen 20 und 80°C zu einem geschlossenen, nicht vernetzten, klebfreien Schutzüberzug getrocknet wird. Ein besonderer Vorteil der wäßrigen Überzugsmittel liegt darin, daß sich mit ihnen selbst bei Applikation mit nur einem Auftrag, insbesondere in nur einem Spritzgang, hohe Trockenschichtdicken erzielen lassen. Der Überzug kann nach Erfüllung seiner Schutzfunktion als folienartiger Film ohne besondere Maßnahmen vom zu schützenden Objekt abgezogen und anschließend, ohne eine Umweltgefährdung zu bedeuten, deponiert oder durch Verbrennung beispielsweise ohne Freisetzung giftiger Gase entsorgt werden.

Die aus den erfindungsgemäß verwendeten wäßrigen Überzugsmitteln hergestellten Überzugsschichten zeichnen sich durch eine den Anforderungen entsprechende Schutzwirkung aus. Sie schützen die Lackoberfläche der zu schützenden Objekte zuverlässig vor Anätzungen durch Umwelteinflüsse, beispielsweise sauren Regen und sind somit insbesondere geeignet als temporäre Beschichtungen für Neufahrzeuge.

### Beispiel 1

19 Teile einer 50 gew.-%igen wäßrigen Copolymerisatdispersion aus Acrylsäureestern mit einer Glasübergangstemperatur von 12°C (bestimmt nach DIN 53 765) wird mit 3 Teilen eines handelsüblichen Trennmittels vermischt. Danach werden unter kräftigem Rühren 78 Teile einer 53 gew.-%igen wäßrigen Ethen/Vinylacetat-Copolymer-Dispersion mit einer Glasübergangstemperatur von 13°C (bestimmt nach DIN 53 765) zugemischt. Das so hergestellte wäßrige Überzugsmittel mit einer Viskosität nach DIN 53211-4 von 32 Sekunden wird in 50 µm Trockenschichtdicke auf ein mit einem typischen Autoserienlackaufbau (bestehend aus Grundierungs-, Füller-, Basislack- und äußerer Klarlackschicht) versehenes Probeblech durch Spritzen aufgetragen. 10 minütiges Trocknen bei 80°C (Ofentemperatur) liefert einen geschlossenen, seidenmatten Schutzüberzug, der nach dem Abkühlen ohne besondere Maßnahmen als folienartiger Film von der Klarlackoberfläche abziehbar ist. Im Test mit 36 %iger Schwefelsäure bei 65°C ergibt sich, daß die mit dem Schutzüberzug versehene Klarlackoberfläche vor einer ersten, optisch wahrnehmbaren Schädigung mindestens 30 Minuten länger geschützt ist als die ungeschützte Klarlackoberfläche.

### Beispiel 2

20 Teile des Überzugsmittels aus Beispiel 1 werden vorgelegt und unter dem Dissolver mit einem Teil eines handelsüblichen Polyurethan-Assoziativverdickers (Borchigel L 75 N, 54%ig) versetzt und portionsweise mit weiteren 80 Teilen des Überzugsmittels aus Beispiel 1 komplettiert. Die Viskosität nach DIN 53211-4 beträgt 90 Sekunden.

## Patentansprüche

1. Verfahren zur Herstellung temporärer Schutzüberzüge durch Auftrag eines wäßrigen Überzugsmittels auf ein Substrat, dadurch gekennzeichnet, daß man ein wäßriges Überzugsmittel, welches als Bindemittel in Form wäßriger Polymerdispersionen
A) 50 bis 90 Gew.-% eines oder mehrerer thermoplastischer Copolymere mindestens eines C2-C4-Olefins und mindestens eines Vinylesters einer C2-C11-Monocarbonsäure, wobei Olefin(e) und Vinylester im Gewichtsverhältnis 10 : 90 bis 40 : 60 vorliegen und gemeinsam mindestens 80 Gew.-% des Copolymeren ausmachen,
B) 10 bis 50 Gew.-% eines oder mehrerer thermoplastischer (Meth)acrylcopolymere, die frei sind von Comonomeren mit Nitril- und Amidgruppen und die zu mindestens 50 Gew.-% aus (Meth)acrylsäureestern von C1-C18-Alkoholen bestehen, und
C) 0 bis 30 Gew.-% eines oder mehrerer von A) und B) verschiedener Copolymere,
wobei sich die Gew.-% jeweils auf den Harzfestkörper beziehen und auf 100 Gew.-% ergänzen, enthält verwendet
und
wobei als Substrat eine eingebrannte äußere Lackschicht einer Kraftfahrzeuglackierung dient.

2. Verfahren nach Anspruch 1, dadurch gekennzeichnet, daß in dem thermoplastischen Copolymer der Komponente A) als C2-C4-Olefin Ethen und/oder als Vinylester einer C2-C11-Monocarbonsäure Vinylacetat enthalten ist.

3. Verfahren nach Anspruch 1 oder 2, dadurch gekennzeichnet, daß das Gewichtsverhältnis von Olefin(en) zu Vinylester(n) zwischen 15 : 85 und 30 : 70 beträgt.

4. Verfahren nach einem der Ansprüche 1 bis 3, dadurch gekennzeichnet, daß für das thermoplastische Copolymer der Komponente A) und/oder für die Copolymeren der Komponente C) Comonomere mit Nitril- und Amidgruppen ausgeschlossen sind.

5. Verfahren nach einem der Ansprüche 1 bis 4, dadurch gekennzeichnet, daß das thermoplastische Copolymer der Komponente A) ausschließlich aus C2-C4-Olefin(en) und Vinylester(n) einer C2-C11-Monocarbonsäure aufgebaut ist.

6. Verfahren nach einem der Ansprüche 1 bis 5, dadurch gekennzeichnet, daß das thermoplastische Copolymer der Komponente A) und/oder das thermoplastische (Meth)acrylcopoylmer der Komponente B) eine Glasübergangstemperatur zwischen 0 und 30 °C aufweist.

7. Verfahren nach einem der Ansprüche 1 bis 6, dadurch gekennzeichnet, daß das wäßrige Überzugsmittel einen Festkörpergehalt von 30 bis 60 Gew.-% aufweist.

8. Verfahren nach einem der Ansprüche 1 bis 7, dadurch gekennzeichnet, daß das wäßrige Überzugsmittel ein oder mehrere rheologiesteuernde und/oder verdickend wirkende Mittel enthält.

9. Verfahren nach einem der Ansprüche 1 bis 8, wobei das wäßrige Überzugsmittel durch Spritzen oder Gießen appliziert wird.

10. Verfahren nach einem der Ansprüche 1 bis 9, bei dem das wäßrige Überzugsmittel in einer Trockenschichtdicke von 30 bis 100 µm aufgetragen wird.

11. Verfahren nach einem der Ansprüche 1 bis 10, wobei man das wäßrige Überzugsmittel durch Spritzen oder Gießen in einer Trockenschichtdicke von 30 bis 100 µm auf eine eingebrannte äußere Lackschicht einer Kraftfahrzeugmehrschichtlackierung appliziert und bei Temperaturen zwischen 20 und 80 °C zu einem geschlossenen, nicht vernetzten klebfreien Schutzüberzug trocknet.

## Claims

1. A process for preparing temporary protective coatings by applying an aqueous coating agent to a substrate, characterised in that an aqueous coating agent which contains as binder, in the form of aqueous polymer dispersions,
A) 50 to 90 wt.% of one or more thermoplastic copolymers of at least one C2-C4 olefin and at least one vinyl ester of a C2-C11 monocarboxylic acid, wherein olefin(s) and vinyl ester(s) are present in the ratio by weight of 10 : 90 to 40 : 60 and together make up at least 80 wt.% of the copolymers,
B) 10 to 50 wt.% of one or more thermoplastic (meth)acrylic copolymers which do not contain monomers with nitrile and amide groups and at least 50 wt.% of which consist of (meth)acrylates of C1-C18 alcohols, and
C) 0 to 30 wt.% of one or more copolymers which differ from A) and B),
is used, wherein all the data given in wt.% refers to the resin solids and add up to 100 wt.%,
and
wherein a stoved outermost lacquer layer of a motor vehicle lacquer finish acts as the substrate.

2. A process according to Claim 1, characterised in that the thermoplastic copolymer in component A) contains ethene as the C2-C4 olefin and/or vinyl acetate as the vinyl ester of a C2-C11 monocarboxylic acid.

3. A process according to Claim 1 or 2, characterised in that the ratio by weight of olefin(s) to vinyl ester(s) is between 15 : 85 and 30 : 70.

4. A process according to one of Claims 1 to 3, characterised in that comonomers with nitrile and amide groups are excluded from the thermoplastic copolymer in component A) and/or from the copolymers in component C).

5. A process according to one of Claims 1 to 4, characterised in that the thermoplastic copolymer in component A) is built up exclusively from C2-C4 olefin(s) and vinyl ester(s) of a C2-C11 monocarboxylic acid.

6. A process according to one of Claims 1 to 5, characterised in that the thermoplastic copolymer in component A) and/or the thermoplastic (meth)acrylic copolymer in component B) have a glass transition temperature between 0 and 30°C.

7. A process according to one of Claims 1 to 6, characterised in that the aqueous coating agent has a solids content of 30 to 60 wt.%.

8. A process according to one of Claims 1 to 7, characterised in that the aqueous coating agent contains one or more rheology-regulating and/or thickening agents.

9. A process according to one of Claims 1 to 8, wherein the aqueous coating agent is applied by spraying or casting.

10. A process according to one of Claims 1 to 9, in which the aqueous coating agent is applied in a dry layer thickness of 30 to 100 µm.

11. A process according to one of Claims 1 to 10, wherein the aqueous coating agent is applied by spraying or casting in a dry layer thickness of 30 to 100 µm to a stoved outermost lacquer layer of a motor vehicle lacquer finish and is dried at temperatures between 20 and 80°C to give a sealed, non-cross-linked, tack-free protective coating.

## Revendications

1. Procédé de préparation de revêtements protecteurs temporaires par l'application d'une couche aqueuse sur un substrat, caractérisé en ce que l'on utilise une couche aqueuse qui contient comme liant sous forme de dispersions aqueuses de polymères :
A) entre 50 % en poids et 90 % en poids d'un ou de plusieurs copolymères thermoplastiques au moins d'une oléfine C2-C4 et au moins d'un ester vinylique d'un acide monocarboxylique C2-C11, où une oléfine ou des oléfines et un ester vinylique sont présents suivant un rapport de poids compris entre 10:90 et 40:60 et qui, ensemble, constituent au moins 80 % en poids du copolymère,
B) entre 10 % en poids et 50 % en poids d'un ou de plusieurs copolymères (méth)acryliques thermoplastiques qui sont exempts de comonomères comportant des groupes nitriles et amides et qui se composent au moins de 50 % en poids d'esters d'acide (méth)acrylique d'alcools C1-C18, et
C) entre 0 % en poids et 30 % en poids d'un ou de plusieurs différents copolymères de A) et de B),
où les pourcentages en poids se rapportent à chaque fois au solide de résine, ces pourcentages se complétant pour atteindre 100 % en poids, et
où une couche de peinture extérieure cuite au four d'une peinture de véhicule sert de substrat.

2. Procédé selon la revendication 1, caractérisé en ce que le copolymère thermoplastique du composant A) contient de l'éthylène servant d'oléfine C2-C4 et ou/de l'acétate de vinyle servant d'ester vinylique d'un acide monocarboxylique C2-C11.

3. Procédé selon la revendication 1 ou 2, caractérisé en ce que le rapport de poids entre l'oléfine ou les oléfines, et l'ester ou les esters vinyliques est compris entre 15:85 et 30:70.

4. Procédé selon l'une quelconque des revendications 1 à 3, caractérisé en ce que des comonomères comportant des groupes nitriles et amides sont exclus pour le copolymère thermoplastique du composant A) et/ou pour les copolymères du composant C).

5. Procédé selon l'une quelconque des revendications 1 à 4, caractérisé en ce que le copolymère thermoplastique du composant A) est constitué exclusivement d'une oléfine ou d'oléfines C2-C4 et d'un ester ou d'esters vinyliques d'un acide monocarboxylique C2-C11.

6. Procédé selon l'une quelconque des revendications 1 à 5, caractérisé en ce que le copolymère thermoplastique du composant A) et/ou le copolymère (méth)acrylique thermoplastique du composant B) présente une température de transition vitreuse comprise entre 0°C et 30°C.

7. Procédé selon l'une quelconque des revendications 1 à 6, caractérisé en ce que la couche aqueuse présente une teneur de corps solide comprise entre 30 % en poids et 60 % en poids.

8. Procédé selon l'une quelconque des revendications 1 à 7, caractérisé en ce que la couche aqueuse contient un ou plusieurs moyens commandant la rhéologie et/ou un ou plusieurs moyens agissant comme des épaississants.

9. Procédé selon l'une quelconque des revendications 1 à 8, où la couche aqueuse est appliquée par pulvérisation ou par répartition.

10. Procédé selon l'une quelconque des revendications 1 à 9, dans lequel la couche aqueuse est appliquée suivant une épaisseur de couche sèche comprise entre 30 µm et 100 µm.

11. Procédé selon l'une quelconque des revendications 1 à 10, où on applique la couche aqueuse par pulvérisation ou par répartition suivant une épaisseur de couche sèche comprise entre 30 µm et 100 µm, sur une couche de peinture extérieure cuite au four d'une peinture multicouche d'un véhicule, couche aqueuse que l'on sèche à des températures comprises entre 20°C et 80°C pour obtenir un revêtement de protection sans colle, non réticulé et fermé.
